# EUROPEAN PATENT APPLICATION

(11) **EP 3 540 096 A1**
(43) Date of publication of application: **18.09.2019**
(21) Application number: 18842698.5
(22) Date of filing: 22.08.2016
(51) Int. Cl.: C25D 1/00, C25D 1/08, C25D 7/00, C25D 7/06, C25D 21/00, H01M 4/66, H01M 4/80

(54) **METHOD FOR PRODUCING POROUS METALLIC BODY, AND PLATING DEVICE**

(71) Applicant: Sumitomo Electric Toyama Co., Ltd., Imizu-shi Toyama 934-8522 (JP)
(72) Inventor: TSUCHIDA, Hitoshi, Imizu-shi, Toyama 9348522 (JP)
(74) Representative: Boult Wade Tennant LLP
(86) International application number: PCT/JP2018/030047
(87) International publication number: WO 2019/116632

(57) **Abstract**

A method for producing a metal porous body includes the steps of: performing electrical conduction treatment on a surface of a skeleton of a sheet-like resin porous body having the skeleton with a three-dimensional network structure, to obtain a conductive resin porous body having a conductive layer; performing electroplating treatment on a surface of a skeleton of the conductive resin porous body to obtain a plated resin porous body having a metal plating layer; and performing treatment of removing at least the resin porous body from the plated resin porous body to obtain a metal porous body. In the electroplating treatment, power was supplied to a rotation shaft of a rotating electrode roller by bringing a power supply brush formed by a material containing carbon as a main component into sliding contact with the rotation shaft.

## Description

### TECHNICAL FIELD

The present invention relates to a method for producing a metal porous body and a plating apparatus.

This application claims priority on Japanese Patent Application No. 2017-240116 filed on December 15, 2017, the entire contents of which are incorporated herein by reference.

### BACKGROUND ART

Conventionally, a sheet-like metal porous body having a skeleton with a three-dimensional network structure has been used for various uses such as a filter that requires heat resistance, a battery electrode plate, a catalyst support, and a metal composite. As a method for producing the metal porous body, a method has been known in which, after the surface of the skeleton of a resin porous body is subjected to electrical conduction treatment, metal plating is performed by means of electroplating treatment and treatment of removing the resin porous body is performed, thereby obtaining a metal porous body (see, for example, PATENT LITERATURE 1).

In the method for producing the metal porous body described in PATENT LITERATURE 1, in performing the electroplating treatment, in order to form a metal plating layer on a single surface side or each surface side of a sheet-like resin porous body having a skeleton surface made conductive, electroplating treatment is repeatedly performed in a plurality of plating tanks while the resin porous body is being sequentially fed by feeding rollers and electrode rollers that serve as power supply cathodes outside the plating tanks. A current is sent to each electrode roller by bringing a rotation shaft of the electrode roller and a power supply brush into sliding contact with each other (see, for example, PATENT LITERATURE 2).

### CITATION LIST

### [PATENT LITERATURE]

PATENT LITERATURE 1: Japanese Laid-Open Patent Publication No. 2015-153648
PATENT LITERATURE 2: Japanese Laid-Open Utility Model Publication No. H5-97082
PATENT LITERATURE 3: Japanese Utility Model Registration No. 3075438
PATENT LITERATURE 4: Japanese Laid-Open Patent Publication No. 2001-157413
PATENT LITERATURE 5: Japanese Laid-Open Patent Publication No. 2011-205816
PATENT LITERATURE 6: Japanese Laid-Open Patent Publication No. 2001-346363
PATENT LITERATURE 7: Japanese Laid-Open Patent Publication No. H6-84775

### SUMMARY OF INVENTION

A method for producing a metal porous body according to the present disclosure is a method for producing a metal porous body, comprising the steps of: performing electrical conduction treatment on a surface of a skeleton of a sheet-like resin porous body having the skeleton with a three-dimensional network structure, to obtain a conductive resin porous body having a conductive layer; performing electroplating treatment on a surface of a skeleton of the conductive resin porous body to obtain a plated resin porous body having a metal plating layer; and performing treatment of removing at least the resin porous body from the plated resin porous body to obtain a metal porous body, wherein, in the electroplating treatment, power was supplied to a rotation shaft of a rotating electrode roller by bringing a power supply brush formed by a material containing carbon as a main component into sliding contact with the rotation shaft.

A plating apparatus according to the present disclosure is a plating apparatus for performing electroplating treatment on a surface of a skeleton of a conductive resin porous body obtained by forming a conductive layer on a surface of a skeleton of a sheet-like resin porous body having the skeleton with a three-dimensional network structure, to form a metal plating layer, the plating apparatus comprising: a plating tank; an electrode roller having a rotatable rotation shaft and configured to feed the conductive resin porous body to the plating tank by rotating the rotation shaft; and a power supply brush configured to come into sliding contact with the rotation shaft of the electrode roller, wherein the power supply brush is formed by a material containing carbon as a main component.

### BRIEF DESCRIPTION OF DRAWINGS

FIG. 1 is a schematic diagram showing a metal porous body.
FIG. 2 is a schematic diagram showing a battery in which the metal porous body is used as a positive electrode plate.
FIG. 3 is a flowchart showing a method for producing a metal porous body according to an embodiment of the present invention.
FIG. 4A is an enlarged schematic view of the surface of a resin porous body.
FIG. 4B is an enlarged schematic view of the surface of a conductive resin porous body.
FIG. 4C is an enlarged schematic view of the surface of a plated resin porous body.
FIG. 4D is an enlarged schematic view of the surface of a metal porous body.
FIG. 5 is a side cross-sectional view showing an example of a plating apparatus.
FIG. 6 is a plan view showing a structure for supplying power to an electrode roller.
FIG. 7 is a cross-sectional view showing a power supply device.
FIG. 8A is a side view showing a power supply brush.
FIG. 8B is a diagram of the power supply brush as seen from the lower side of FIG. 8A.
FIG. 9 is a schematic diagram showing a modification of the plating apparatus.
FIG. 10 is a table showing evaluation results of a plurality of examples.
FIG. 11 is a table showing evaluation results of a plurality of comparative examples.

### DESCRIPTION OF EMBODIMENTS

### [TECHNICAL PROBLEM]

In the case of performing electroplating treatment on a sheet-like resin porous body as in the above-described conventional art, it is necessary to apply a large current to each electrode roller, since the surface area of the resin porous body is large. Therefore, a sintered body containing copper as a main component is generally used for a power supply brush for supplying power to each electrode roller.

However, the power supply brush made of copper is likely to corrode due to influence of corrosive fumes in an electroplating atmosphere. In particular, in the case where the power supply brush is made of a sintered body in order to improve sliding characteristics, the surface of the power supply brush is porous, and thus corrosion of the power supply brush is further accelerated. Therefore, it is necessary to frequently replace the power supply brush, so that there is a problem that the productivity of the metal porous body decreases.

When the power supply brush is corroded, jerkiness (rotational failure) easily occurs at the electrode roller that rotates at a low speed. When such jerkiness occurs, if the amount of plating on the resin porous body is small in the electroplating treatment, the plating thickness of a produced metal porous body is small, so that the skeleton of the metal porous body may be cracked reducing the strength, resulting in a decrease in the quality of the metal porous body.

Furthermore, in the case where a power supply brush made of copper is used, it is necessary to apply a lubricant containing a hydrocarbon compound as a main component to a contact portion between the rotation shaft of the electrode roller and the power supply brush, and thus a problem of a further decrease in the productivity of the metal porous body arises.

Therefore, the present disclosure has been made in view of such circumstances, and an object of the present disclosure is to provide a method for producing a metal porous body and a plating apparatus that can improve the quality and the productivity of the metal porous body.

### [ADVANTAGEOUS EFFECTS OF PRESENT DISCLOSURE]

According to the present disclosure, it is possible to improve the quality and the productivity of the metal porous body.

### [DESCRIPTION OF EMBODIMENTS OF INVENTION]

First, contents of embodiments of the present invention will be listed and described.
(1) A method for producing a metal porous body according to an embodiment of the present invention is a method for producing a metal porous body, comprising the steps of: performing electrical conduction treatment on a surface of a skeleton of a sheet-like resin porous body having the skeleton with a three-dimensional network structure, to obtain a conductive resin porous body having a conductive layer; performing electroplating treatment on a surface of a skeleton of the conductive resin porous body to obtain a plated resin porous body having a metal plating layer; and performing treatment of removing at least the resin porous body from the plated resin porous body to obtain a metal porous body, wherein, in the electroplating treatment, power was supplied to a rotation shaft of a rotating electrode roller by bringing a power supply brush formed by a material containing carbon as a main component into sliding contact with the rotation shaft.

In the method for producing a metal porous body, in the electroplating treatment, the power supply brush that supplies power to the rotation shaft of the electrode roller by coming into sliding contact with the rotation shaft of the electrode roller is less likely to be corroded as compared to a conventional power supply brush made of copper, since the power supply brush is formed by a material containing carbon, which has excellent corrosion resistance, as a main component. Therefore, it is not necessary to frequently replace the power supply brush, and thus the productivity of the metal porous body can be improved.

Since the corrosion resistance of the power supply brush is improved, even when the amount of plating is reduced in the electroplating treatment, occurrence of jerkiness at the rotation shaft of the electrode roller can be inhibited. Accordingly, cracking can be inhibited from occurring in the metal porous body thereby to reduce the strength of the metal porous body, and thus the quality of the metal porous body can be improved.

Since carbon has a lower coefficient of dynamic friction and therefore better slidability than copper, it is not necessary to apply the lubricant to the contact portion between the electrode roller and the power supply brush. Therefore, work of periodically applying the lubricant is unnecessary, and thus the productivity of the metal porous body can be further improved.
(2) In the electroplating treatment, heat generated in the power supply brush is preferably dissipated to the outside by a heat dissipation member connected to the power supply brush.
   In this case, a rise in the temperature of the power supply brush can be effectively inhibited by the heat dissipation member. Accordingly, it is not necessary to ensure heat resistance of members around the power supply brush, and thus it is not necessary to add a cooling function. As a result, the cost is reduced.
(3) The rotation shaft of the electrode roller is preferably composed of a material that is less likely to be abraded than the power supply brush.
   In this case, since the power supply brush is abraded earlier than the rotation shaft of the electrode roller, only the power supply brush needs to be periodically replaced, and work of replacing the electrode roller is unnecessary. As a result, the productivity of the metal porous body can be further improved.
(4) The rotation shaft of the electrode roller is preferably composed of a metallic sintered body whose surface is subjected to plating treatment.
   In this case, corrosion of the rotation shaft of the electrode roller can be prevented by the plating treatment.
(5) In the electroplating treatment, abrasion powder generated on a contact surface of the power supply brush that is in contact with the rotation shaft of the electrode roller is preferably guided and discharged to the outside by a groove formed on the contact surface.
   In this case, since the abrasion powder can be prevented from aggregating into lumps and accumulating between the power supply brush and the rotation shaft of the electrode roller, it is not necessary to apply the lubricant to the contact portion between the rotation shaft of the electrode roller and the power supply brush. Therefore, work of periodically applying the lubricant is unnecessary, and thus the productivity of the metal porous body can be further improved.
(6) The power supply brush preferably has a coefficient of dynamic friction of 0.01 to 0.40.
   In this case, the slidability of the power supply brush can be improved while the production cost is reduced.
(7) A current density during power supply from the power supply brush to the electrode roller is preferably 5 A/cm² to 15 A/cm².
   In this case, an increase in the size of the entire power supply device including the power supply brush can be inhibited. In addition, a rise in the temperature of the power supply brush can be inhibited. Accordingly, it is not necessary to ensure heat resistance of members around the power supply brush, and thus it is not necessary to add a cooling function. As a result, the cost is reduced.
(8) A plating apparatus according to an embodiment of the present invention is a plating apparatus for performing electroplating treatment on a surface of a skeleton of a conductive resin porous body obtained by forming a conductive layer on a surface of a skeleton of a sheet-like resin porous body having the skeleton with a three-dimensional network structure, to form a metal plating layer, the plating apparatus comprising: a plating tank; an electrode roller having a rotatable rotation shaft and configured to feed the conductive resin porous body to the plating tank by rotating the rotation shaft; and a power supply brush configured to come into sliding contact with the rotation shaft of the electrode roller, wherein the power supply brush is formed by a material containing carbon as a main component.

In the plating apparatus, the power supply brush that supplies power to the rotation shaft of the electrode roller by coming into sliding contact with the rotation shaft of the electrode roller is less likely to be corroded as compared to a conventional power supply brush made of copper, since the power supply brush is formed by a material containing carbon, which has excellent corrosion resistance, as a main component. Therefore, it is not necessary to frequently replace the power supply brush, and thus the productivity of the metal porous body obtained after the electroplating treatment can be improved.

Since the corrosion resistance of the power supply brush is improved, even when the amount of plating is reduced in the electroplating treatment, occurrence of jerkiness at the electrode roller can be inhibited. Accordingly, cracking can be inhibited from occurring in the metal porous body thereby to reduce the strength of the metal porous body, and thus the quality of the metal porous body obtained after the electroplating treatment can be improved.

Since carbon has a lower coefficient of dynamic friction and therefore better slidability than copper, it is not necessary to apply the lubricant to the contact portion between the electrode roller and the power supply brush. Therefore, work of periodically applying the lubricant is unnecessary, and thus the productivity of the metal porous body obtained after the electroplating treatment can be further improved.

### [DETAILS OF EMBODIMENTS OF INVENTION]

Hereinafter, embodiments of the present invention will be described in detail with reference to the accompanying drawings. It should be noted that at least parts of the embodiment described below may be combined as desired.

### <Metal Porous Body>

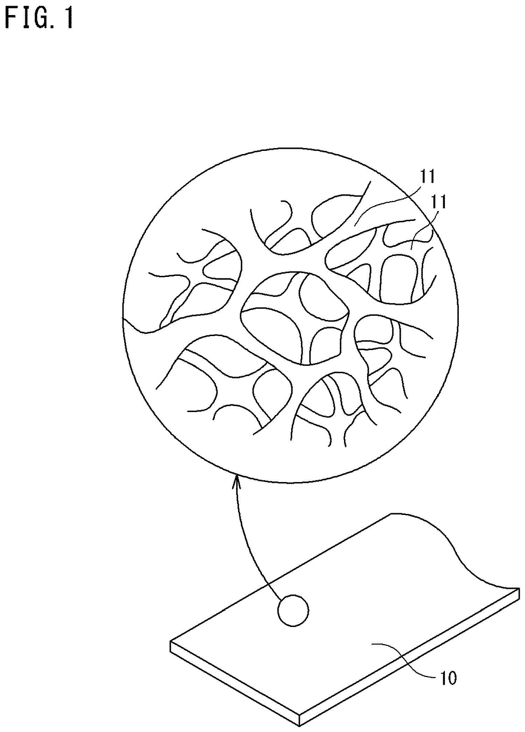

FIG. 1 is a schematic diagram showing a metal porous body. The metal porous body 10 has a sheet-like appearance and has a skeleton 11 forming a three-dimensional network structure. A large number of pores defined by the three-dimensional network structure are formed so as to be arranged from the surface of the metal porous body 10 to the interior of the metal porous body 10.

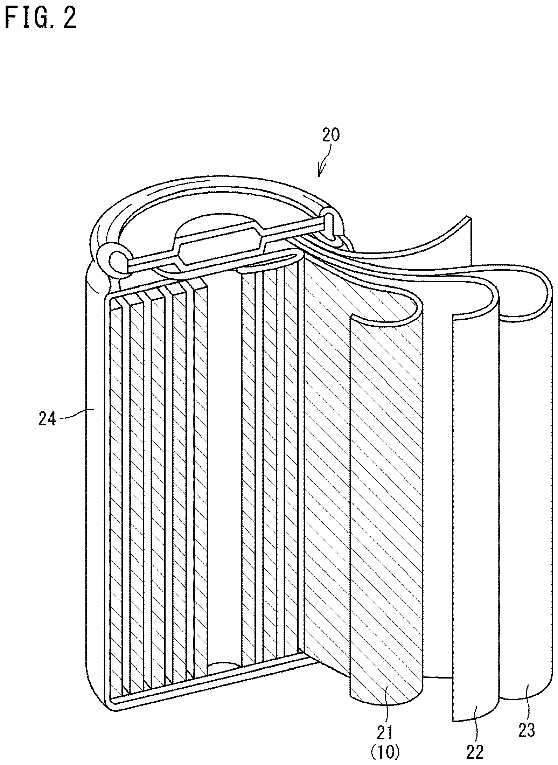

The metal porous body 10 can be used, for example, as a positive electrode plate 21 of a battery 20 as shown in FIG. 2. That is, as shown in FIG. 2, the battery 20 in which the metal porous body 10 according to the present embodiment is used mainly includes the positive electrode plate 21, a separator 22, and a negative electrode plate 23 that are disposed within a casing 24. The positive electrode plate 21, the separator 22, and the negative electrode plate 23 are disposed within the casing 24 in a state of being layered. The layered body of the positive electrode plate 21, the separator 22, and the negative electrode plate 23 is held in a wound state. The positive electrode plate 21 includes the metal porous body 10 according to the present embodiment and an active material (not shown) with which the metal porous body 10 is filled.

### <Production Process for Metal Porous Body>

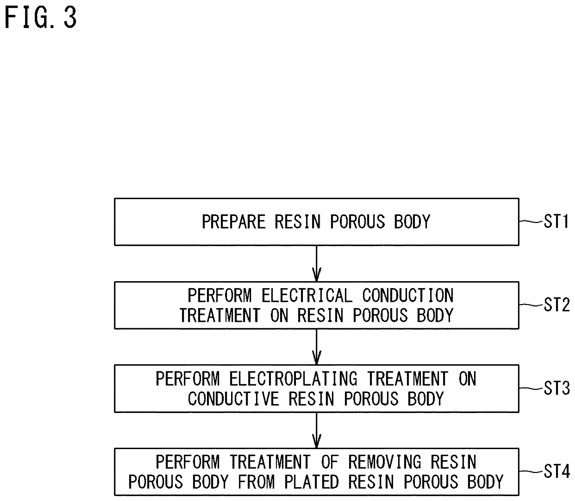

FIG. 3 is a flowchart showing a method for producing the metal porous body 10 according to an embodiment of the present invention. Hereinafter, the flow of the entirety of the method for producing the metal porous body 10 will be described with reference to FIG. 3.

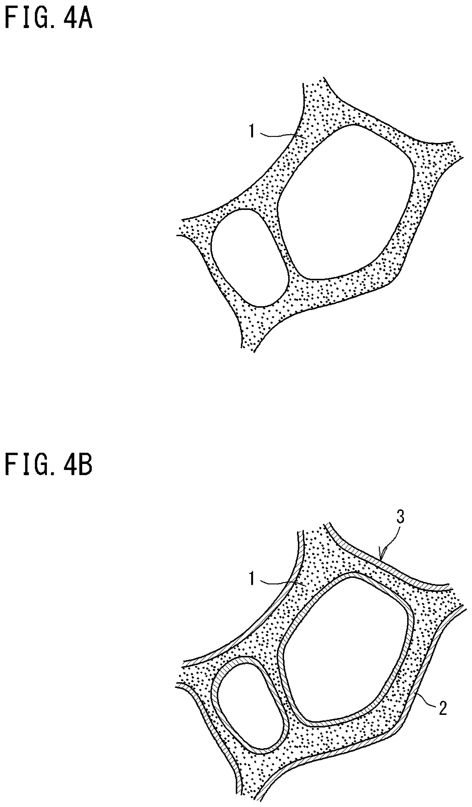

First, a sheet-like resin porous body that has a three-dimensional network structure and serves as a base is prepared (step ST1). FIG. 4A is an enlarged schematic view of the surface of a resin porous body 1 serving as a base. In the resin porous body 1, a large number of pores defined by a three-dimensional network structure are formed so as to be arranged from the surface of the resin porous body 1 to the interior of the resin porous body 1.

Next, electrical conduction treatment is performed on the surface of the skeleton of the resin porous body 1 (step ST2). By this step, a conductive resin porous body 3 having a conductive layer 2 formed by a thin electric conductor on the surface of the skeleton of the resin porous body 1 as shown in FIG. 4B can be obtained.

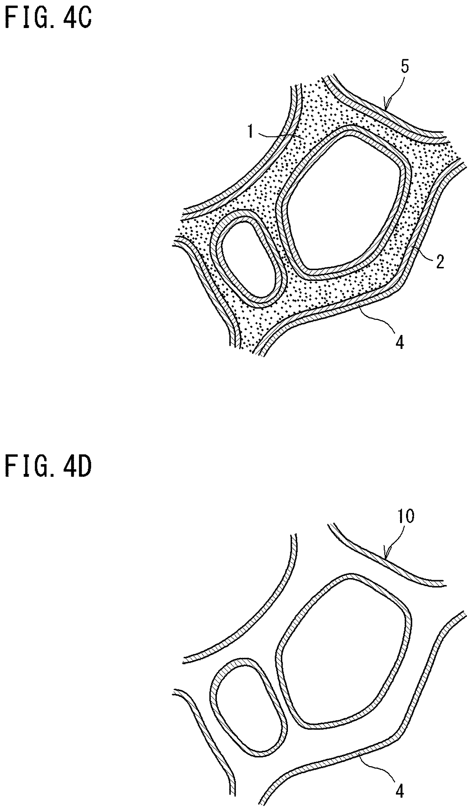

Subsequently, electroplating treatment is performed on the surface of the skeleton of the conductive resin porous body 3 (step ST3). By this step, a plated resin porous body 5 having a metal plating layer 4 formed on the surface of the skeleton of the conductive resin porous body 3 as shown in FIG. 4C can be obtained.

Next, treatment of removing the resin porous body 1, which is the base, from the plated resin porous body 5 is performed (step ST4). In this removing treatment, the resin porous body 1 is eliminated by burning or the like, whereby the metal porous body 10 in which only the metal plating layer 4 is left can be obtained (see FIG. 4D). Hereinafter, each step will be sequentially described in detail.

### <Preparation of Resin Porous Body>

The sheet-like resin porous body 1 having the skeleton with the three-dimensional network structure is prepared. Examples of the material of the resin porous body 1 include a resin foam, a nonwoven fabric, felt, and a woven fabric, and these materials may be combined as necessary. In addition, the material of the resin porous body 1 is not particularly limited, but a material that can be eliminated by burning after the metal plating layer 4 is formed on the surface of the skeleton by the electroplating treatment is preferable.

The material of the resin porous body 1 is preferably a flexible material, since a sheet-like material is particularly easily broken due to handling thereof if the rigidity of the material is high. In the present embodiment, a resin foam is preferably used as the material of the resin porous body 1. The resin foam only needs to be porous, and a known or commercially-available one can be used. Examples of such a material include foamed urethane and foamed styrene. Among them, foamed urethane is particularly preferable from the viewpoint of having a high porosity. The thickness, the porosity, and the average pore size of the resin foam are not particularly limited, and can be set as appropriate according to use.

### <Electrical Conduction Treatment>

Next, for performing electroplating treatment, electrical conduction treatment is performed in advance on the surface of the skeleton of the resin porous body 1. The method for the electrical conduction treatment is not particularly limited as long as the conductive layer 2 can be formed on the surface of the skeleton of the resin porous body 1. Examples of the material for forming the conductive layer 2 include metals such as nickel, titanium, and stainless steel, and carbon powder such as graphite and amorphous carbon including carbon black, etc. Among them, particularly, carbon powder is preferable, and carbon black is more preferable. The conductive layer 2 only needs to be continuously formed on the surface of the skeleton of the resin porous body 1. The weight of the conductive layer 2 per unit area is not particularly limited, and may be normally about 5 g/m² to about 15 g/m², and preferably about 7 g/m² to about 10 g/m².

As specific examples of the electrical conduction treatment, for example, in the case of using nickel, electroless plating treatment, sputtering treatment, and the like are preferable. In addition, in the case of using a material such as carbon black, graphite, or a metal such as titanium and stainless steel, treatment in which a mixture obtained by adding a binder to fine powder of the material is applied to the surface of the skeleton of the resin porous body 1 is preferable.

As the electroless plating treatment using nickel, for example, the resin porous body 1 may be immersed into a known electroless nickel plating bath such as a nickel sulfate aqueous solution containing sodium hypophosphite as a reducing agent. Before the immersion into the plating bath, the resin porous body 1 may be immersed as necessary into an activation liquid containing a very small amount of palladium ions (a cleaning liquid manufactured by JAPAN KANIGEN Co., Ltd.) or the like.

As the sputtering treatment using nickel, for example, the resin porous body 1 may be attached to a substrate holder, then a DC voltage may be applied between the substrate holder and a target (nickel) while inert gas is being introduced, whereby ionized inert gas may be collided against the nickel, and the blown nickel particles may be accumulated on the surface of the skeleton of the resin porous body 1.

### <Electroplating Treatment>

When the thickness of the metal plating layer is increased by at least one of the above electroless plating treatment and the above sputtering treatment, it is not necessary to perform electroplating treatment. However, from the viewpoint of productivity and cost, a method is preferably adopted in which, as described above, first, electrical conduction treatment is performed on the resin porous body 1, and then the metal plating layer 4 is formed on the conductive resin porous body 3 by electroplating treatment.

The electroplating treatment only needs to be performed according to an ordinary method. For example, in the case of nickel plating, a known or commercially-available one can be used as a plating bath. Examples of the plating bath include a Watts bath, a chlorination bath, and a sulfamic acid bath. In the above electroless plating treatment or sputtering treatment, the conductive resin porous body 3 is immersed into the plating bath, the conductive resin porous body 3 and a counter electrode plate of a plating metal are connected to a cathode and an anode, respectively, and a DC or pulse interrupted current is applied thereto, whereby the metal plating layer 4 can be further formed on the conductive layer 2 of the conductive resin porous body 3. The metal plating layer 4 only needs to be formed on the conductive layer 2 such that the conductive layer 2 is not exposed (see FIG. 4C).

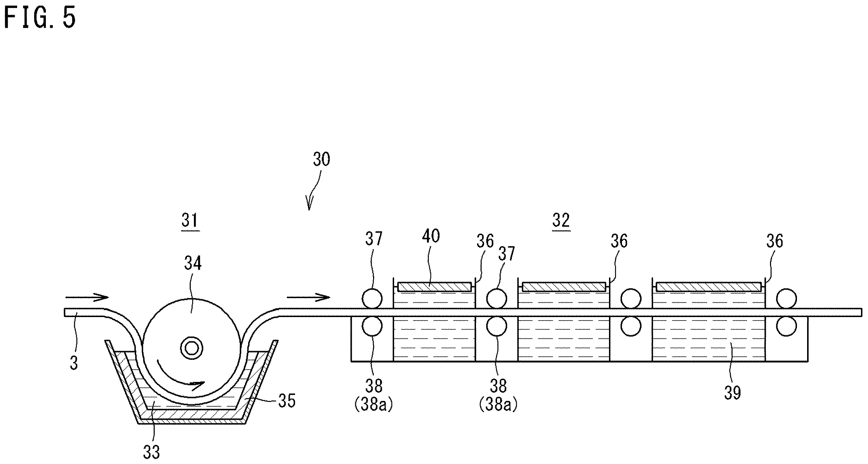

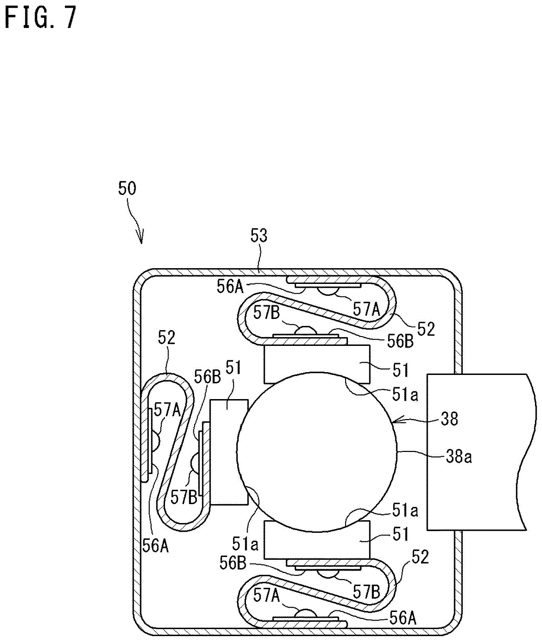

FIG. 5 is a side cross-sectional view showing an example of a plating apparatus 30 that continuously performs electroplating treatment on the sheet-like conductive resin porous body 3. The plating apparatus 30 of the present embodiment is configured to feed the sheet-like conductive resin porous body 3 from the left side to the right side in FIG. 5, and includes a first plating tank 31, a second plating tank 32 disposed at the downstream side of the first plating tank 31, and a power supply device 50 (see FIG. 7).

The first plating tank 31 includes a plating bath 33, a cylindrical electrode 34 (cylindrical cathode), and an anode 35 (cylindrical anode) provided on an inner wall of a container. By the conductive resin porous body 3 passing through the inside of the plating bath 33 along the cylindrical electrode 34, the metal plating layer 4 is formed on one surface side (the lower surface side in FIG. 5) of the conductive resin porous body 3.

The second plating tank 32 includes a plurality of tanks 36 for forming the metal plating layer 4 on the other surface side (the upper surface side in FIG. 5) of the conductive resin porous body 3. The conductive resin porous body 3 undergoes metal plating by being sequentially fed and passing through plating baths 39 in a state of being held between a plurality of feeding rollers 37 and electrode rollers 38, which are disposed adjacent to the respective tanks 36. In each of the plurality of tanks 36, an anode 40 is provided at the other surface side of the conductive resin porous body 3 with the plating bath 39 interposed therebetween. By supplying power to the anodes 40 and rotation shafts 38a of the electrode rollers 38 (tank-outer power supply cathodes), the metal plating layer 4 is formed on the other surface side of the conductive resin porous body 3.

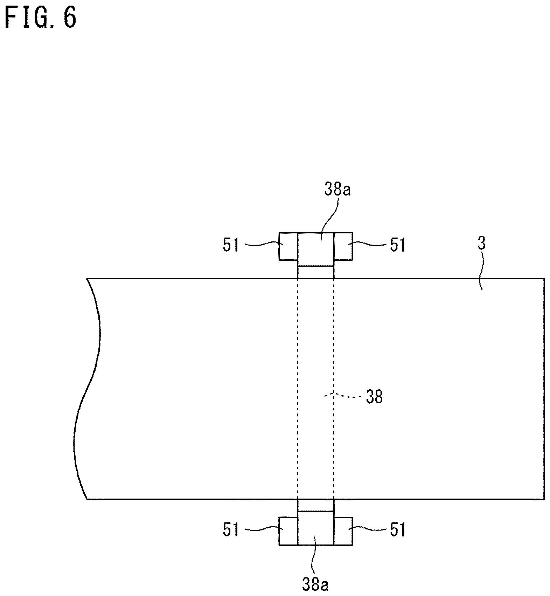

FIG. 6 is a plan view showing a structure for supplying power to the rotation shafts 38a of the electrode roller 38. The rotation shafts 38a of the electrode roller 38 are provided at both axial end portions of the electrode roller 38 which rotates in contact with the sheet-like conductive resin porous body 3. Each of the rotation shafts 38a of each electrode roller 38 is supplied with power by a plurality of power supply brushes 51 each of which is in sliding contact with the outer circumferential surface of the rotation shaft 38a. Each power supply brush 51 is formed by a material containing carbon as a main component. The "main component" refers to a component having a highest mass content, and impurities may be contained as long as the advantageous effects of the present invention are achieved.

Carbon has a layered crystal structure, and therefore has self-lubricity and has a property of having a low coefficient of dynamic abrasion. Thus, carbon has excellent abrasion resistance and has electrical conductivity, and further appropriate electric resistance characteristics can be stably obtained by selecting a material to be used and a production process according to use.

From the viewpoint of a current value and a coefficient of dynamic friction, each power supply brush 51 may be formed by a material containing electrographite, carbon graphite, natural graphite, or artificial graphite as a main component, or may be formed by a combination of these graphites. Each rotation shaft 38a of each electrode roller 38 is composed of a material that is less likely to be abraded than the power supply brush 51. For example, each rotation shaft 38a of the present embodiment is composed of a metallic sintered body, and plating treatment is performed on the surface of the sintered body in order to prevent corrosion. Accordingly, each power supply brush 51 is configured to be abraded against the rotation shaft 38a of the electrode roller 38.

The coefficient of dynamic friction of each power supply brush 51 is about 0.01 to 0.40 and preferably 0.10 to 0.30. This is because: when the coefficient of dynamic friction is less than these ranges, the production cost is disadvantageously increased; and when the coefficient of dynamic friction is greater than these ranges, the problem arises that the slidability of the power supply brush 51 is deteriorated and the amount of abrasion thereof is increased.

FIG. 7 is a cross-sectional view showing the power supply device 50 including the plurality of power supply brushes 51. The power supply device 50 is provided at each of both axial end portions of the electrode roller 38. The power supply device 50 of the present embodiment includes the plurality of (in this example, three) power supply brushes 51, a plurality of biasing members 52 that press and bias the respective power supply brushes 51 against the outer circumferential surface of the rotation shaft 38a of the electrode roller 38, and a casing 53.

The casing 53 is formed, for example, by a metal member having electric conductivity. The casing 53 of the present embodiment is formed in a rectangular cross-sectional shape so as to surround the rotation shaft 38a of the electrode roller 38, and the biasing members 52 are attached to three surfaces, that is, the upper surface, the lower surface, and the left surface, among four inner surfaces of the casing 53.

Each biasing member 52 is not particularly limited as long as the biasing member 52 presses and biases the power supply brush 51 against the outer circumferential surface of the rotation shaft 38a of the electrode roller 38. For example, each biasing member 52 of the present embodiment is formed by a plate spring that is bent in an S cross-sectional shape. One end portion of each biasing member 52 is attached to the corresponding inner surface of the casing 53, for example, by a fixing plate 56A and a bolt 57A, and the power supply brush 51 is connected to the other end portion of each biasing member 52, for example, by a fixing plate 56B and a bolt 57B. Accordingly, contact surfaces 51a (described later) of the three power supply brushes 51 are pressed against the outer circumferential surface of the rotation shaft 38a of the electrode roller 38 from the upper side, the lower side, and the left side in FIG. 7 by the biasing force of the corresponding biasing members 52.

Each biasing member 52 is preferably formed by a metal member having both excellent electric conductivity and excellent heat dissipation. Each biasing member 52 of the present embodiment is formed by a metal member obtained by tinning copper having electric conductivity and having excellent heat dissipation. In addition, in the present embodiment, the fixing plates 56A and 56B also have heat dissipation. Thus, the biasing member 52 and the fixing plates 56A and 56B serve as a heat dissipation member that dissipates heat generated in the power supply brush 51 connected to this biasing member 52, to the outside. The heat dissipation member connected to the power supply brush 51 may be formed by a member other than the biasing member 52 and the fixing plates 56A and 56B, or may be formed by the biasing member 52, the fixing plates 56A and 56B, and the casing 53.

In each power supply brush 51, a surface that faces the outer circumferential surface of the rotation shaft 38a of the electrode roller 38 is the contact surface 51a that is in sliding contact with the outer circumferential surface. The contact surface 51a is formed in a circular arc shape along the outer circumferential surface of the rotation shaft 38a of the electrode roller 38 and is in surface contact with the outer circumferential surface.

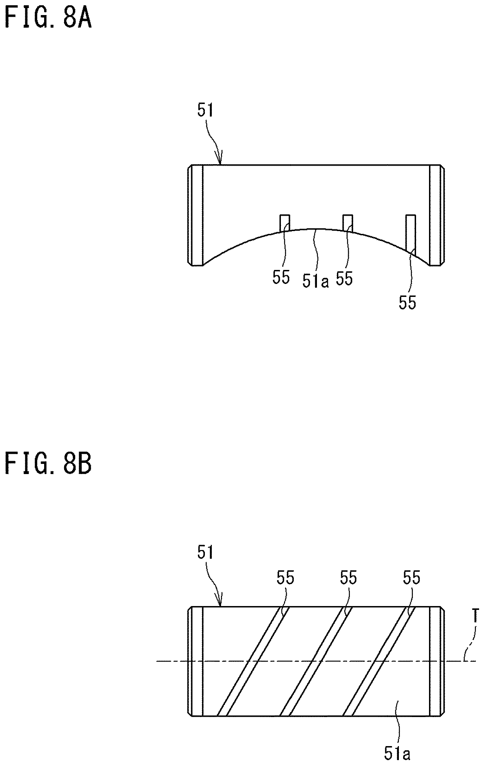

FIG. 8A is a side view showing the power supply brush 51. In addition, FIG. 8B is a diagram of the power supply brush 51 as seen from the lower side in FIG. 8A. As shown in FIG. 8A and FIG. 8B, a plurality of (in this example, three) slit-shaped grooves 55 are formed on the contact surface 51a of the power supply brush 51. These grooves 55 are formed on the contact surface 51a at regular intervals in the longitudinal direction of the contact surface 51a (the right-left direction in FIG. 8A and FIG. 8).

Each groove 55 is formed so as to extend in a direction crossing a tangent direction T (see FIG. 8B) in which the contact surface 51a of the power supply brush 51 is tangent to the rotation shaft 38a of the electrode roller 38. In the present embodiment, each groove 55 is formed so as to extend linearly over the entirety of the contact surface 51a in the lateral direction of the contact surface 51a (the up-down direction in FIG. 8A and FIG. 8) in a state of being inclined at a predetermined angle (for example, 30°) relative to the lateral direction. Accordingly, abrasion powder generated on the contact surface 51a of the power supply brush 51 due to sliding contact with the rotation shaft 38a of the electrode roller 38 can be guided and discharged to the outside by the plurality of grooves 55.

The current density during power supply from each power supply brush 51 to the rotation shaft 38a of the electrode roller 38 (the ratio of the current to the total cross-sectional area of the power supply brush 51) is about 5 A/cm² to about 15 A/cm² and preferably 8 A/cm² to 13 A/cm². When the current density is less than these ranges, the size of the entire power supply device 50 is increased and the distance from the power supply device 50 to the corresponding tank 36 is lengthened, and thus voltage loss is increased. On the other hand, when the current density is greater than these ranges, the temperature of the power supply brush 51 rises, and thus it is necessary to ensure heat resistance of members around the power supply brush 51, which is disadvantageous in cost.

The weight of the metal plating layer 4 per unit area is not particularly limited, but is normally about 150 g/m² to about 400 g/m², and the sum of the weight of the conductive layer 2 per unit area and the weight of the metal plating layer 4 per unit area is preferably not less than 200 g/m² and not greater than 350 g/m². This is because: when the above sum is less than this range, the strength of the metal porous body may be reduced; and when the above sum is greater than this range, the power supply brush made of carbon has increased heat generation, or the amount of plating is increased, which is disadvantageous in cost.

The electroplating treatment is not limited to the electroplating treatment of the present embodiment, and, for example, a plating treatment method using a preliminary plating tank or a plating treatment method using a preliminary plating tank and a lift type main plating tank may be adopted.

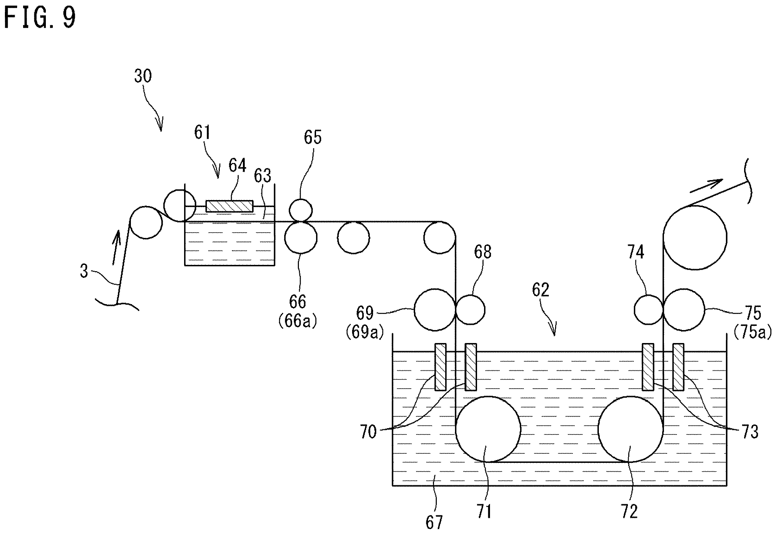

FIG. 9 is a schematic diagram showing a modification of the plating apparatus 30. In the present modification, the plating apparatus 30 includes a preliminary plating tank 61 and a lift type main plating tank 62 disposed at the downstream side of the preliminary plating tank 61.

The preliminary plating tank 61 includes a plating bath 63, an anode 64 (cylindrical anode), a presser roller 65, and an electrode roller 66 having a rotation shaft 66a (power supply cathode) at each end portion thereof. The conductive resin porous body 3 preliminarily undergoes plating on one side surface (the upper surface side in FIG. 9) of the conductive resin porous body 3 by being sequentially fed and passing through the inside of the plating bath 63 in a state of being held between the presser roller 65 and the electrode roller 66,

The main plating tank 62 includes a plating bath 67, a first presser roller 68, a first electrode roller 69 having a rotation shaft 69a (power supply cathode) at each end portion thereof, a pair of first anodes 70 (cylindrical anodes), a first feeding roller 71, a second feeding roller 72, a pair of second anodes 73 (cylindrical anodes), a second presser roller 74, and a second electrode roller 75 having a rotation shaft 75a (power supply cathode) at each end portion thereof.

In the main plating tank 62, the conductive resin porous body 3 is sequentially drawn in between the pair of first anodes 70 within the plating bath 67 in a state of being held between the first presser roller 68 and the first electrode roller 69. At this time, plating is performed on both surface sides of the conductive resin porous body 3 by supplying power to the rotation shafts 69a of the first electrode roller 69 and the pair of first anodes 70.

Next, the conductive resin porous body 3 is sequentially fed between the pair of second anodes 73 by the first and second feeding rollers 71 and 72 within the plating bath 67. Then, the conductive resin porous body 3 is sequentially lifted from the inside of the plating bath 67 in a state of being held between the second presser roller 74 and the second electrode roller 75. At this time, plating is performed on both surface sides of the conductive resin porous body 3 by supplying power to the pair of second anodes 73 and the rotation shafts 75a of the second electrode roller 75.

The rotation shafts 66a of the electrode roller 66 of the preliminary plating tank 61 are supplied with power by power supply brushes (not shown) that are in sliding contact with the rotation shafts 66a. Similarly, the rotation shafts 69a and 75a of the first and second electrode rollers 69 and 75 of the main plating tank 62 are supplied with power by power supply brushes (not shown) that are in sliding contact with the rotation shafts 69a and the rotation shafts 75a.

The power supply brushes that supply power to the rotation shafts 66a, 69a, and 75a of the respective electrode rollers 66, 69, and 75 are formed similar to the above embodiment, and thus the description thereof is omitted.

### <Treatment of Removing Resin Porous Body>

Treatment of removing the resin porous body 1 from the plated resin porous body 5 (see FIG. 4C) obtained by the electroplating treatment is performed. In this removing treatment, for example, the resin porous body 1 is removed from the plated resin porous body 5 in an acidic atmosphere such as atmospheric air not lower than about 600°C and not higher than 800°C and preferably not lower than 600°C and not higher than 700°C, and then heating is performed in a reductive atmosphere at 750°C or higher (higher temperatures are desirable but the temperature is preferably 1000°C, since higher temperatures are disadvantageous in cost, or from the viewpoint of the material of the body of a reducing furnace). As reductive gas, hydrogen gas or a mixed gas of hydrogen and carbon dioxide or an inert gas can be used, or these gases can be also used in combination as necessary. In particular, it is preferred if hydrogen gas is always added to reductive gas, since the efficiency of redox is improved.

### [Evaluation Tests]

Next, evaluation tests performed by the present inventors for metal porous bodies produced by the production method of the above embodiment will be described.

First, in order to compare and evaluate a plurality of examples and a plurality of comparative examples, the present inventors produced these examples and comparative examples by the production methods described below.

### <Production Method for Examples >

A polyurethane sheet having a thickness of 1.5 mm was used as a sheet-like resin porous body, and 100 g of carbon black that is amorphous carbon having a particle size of 0.01 µm to 0.2 µm was dispersed into 0.5L of a 10 wt% acrylic ester resin aqueous solution to produce an adhesive coating material at this ratio. Next, the sheet-like resin porous body was continuously immersed into the adhesive coating material, squeezed by rolls, then dried, and subjected to electrical conduction treatment. Then, electroplating treatment was performed on the sheet-like resin porous body subjected to the electrical conduction treatment, to adhere a metal plating of nickel in a predetermined weight per unit area to each of the plurality of examples.

In the electroplating treatment, power was supplied to rotation shafts of rotating electrode rollers by bringing power supply brushes formed by a material containing carbon as a main component into sliding contact with the rotation shafts without using a lubricant. In addition, the electroplating treatment was carried out under conditions of: a current density (the ratio of the current to the total cross-sectional area of each power supply brush) of 8 A/cm²; and an electrode roller rotation speed (sliding speed) of 10 mm/s to 30 mm/s. Each electrode roller was composed of a sintered body made of copper. In addition, on a contact surface of each power supply brush that is in contact with the rotation shaft of the electrode roller, a plurality of grooves for guiding and discharging abrasion powder generated by sliding contact between the power supply brush and the rotation shaft of the electrode roller to the outside, were formed.

In all of the plurality of examples, each power supply brush was designed such that the power supply brush is abraded against the rotation shaft of the electrode roller. For comparison and evaluation, the rotation shafts of the electrode rollers were plated in some of the examples, and the rotation shafts of the electrode rollers were not plated in the other examples. In addition, for comparison and evaluation, a heat dissipation member for dissipating heat generated in each power supply brush (a biasing member for biasing and pressing each power supply brush, etc.) was provided in some of the examples, and the heat dissipation member was not provided in the other examples.

Next, in order to remove the resin component from the resin porous body obtained above in which the conductive layer and the metal plating layer were formed, a sheet-like metal porous body was obtained in an acidic atmosphere of atmospheric air at 700°C and in a reductive atmosphere in which mixed air of H₂ and N₂ at 1000°C was used.

### <Production Method for Comparative Examples >

As comparative examples, similar to the above examples, electroplating treatment was performed on a sheet-like resin porous body subjected to electrical conduction treatment, to adhere a metal plating of nickel in a predetermined weight per unit area to each of the plurality of comparative examples. In the electroplating treatment for the comparative examples, power was supplied to rotation shafts of rotating electrode rollers by bringing power supply brushes formed by a material containing copper as a main component into sliding contact with the rotation shafts. Each electrode roller was composed of a sintered body made of copper. Each power supply brush was designed such that the power supply brush is abraded against the rotation shaft of the electrode roller, and each rotation shaft of each electrode roller was plated.

For comparing and evaluating the plurality of comparative examples to each other, a lubricating oil (lubricant) containing a hydrocarbon compound as a main component was applied to a contact portion between each rotation shaft of each electrode roller and each power supply brush in some of the comparative examples, and was not applied to a contact portion between each rotation shaft of each electrode roller and each power supply brush in the other comparative examples. In addition, for comparison and evaluation, on a contact surface of each power supply brush that is in contact with the rotation shaft of the electrode roller, a plurality of grooves for guiding and discharging abrasion powder generated by sliding contact between the power supply brush and the rotation shaft of the electrode roller to the outside, were formed in some of the comparative examples; and the grooves were not formed on the contact surface in the other comparative examples.

Next, similar to the above examples, in order to remove the resin component from the resin porous body obtained above in which the conductive layer and the metal plating layer were formed, a sheet-like metal porous body was obtained in an acidic atmosphere of atmospheric air at 700°C and in a reductive atmosphere in which mixed air of H₂ and N₂ at 1000°C was used.

### <Production of Battery>

A battery in which the sheet-like metal porous body of each of the respective examples and the respective comparative examples obtained above was used as a positive electrode was produced. Specifically, the metal porous body was filled with a positive electrode active material mixture, for a nickel hydrogen battery, containing nickel hydroxide and cobalt hydroxide as main components, the electrode surface was smoothed, and drying was performed. Thereafter, a roller press was used to produce a positive electrode, for a nickel hydrogen battery, having a thickness of about 0.5 mm. A lead portion for a current collector was formed by crushing a portion to be connected in advance to prevent entry of paste and then performing ultrasonic welding on the crushed portion. Next, a sealed cylindrical battery was produced by using a known hydrogen-storing alloy negative electrode as a negative electrode, a hydrophilized PP nonwoven fabric as a separator, and a 30 wt% potassium hydroxide aqueous solution containing 30 g/L of lithium hydroxide dissolved therein as an electrolytic solution.

### <Method for Evaluating Metal Porous Body>

When the examples and the comparative examples were produced as described above, measurements, observations, tests, etc., were carried out as described below. Measurement of Dynamic Frictional Resistance

The coefficient of dynamic friction between the material of each rotation shaft of each electrode roller and the material of each power supply brush was measured according to JIS K7125 (1999).

### Observation of Contact Portion between Rotation Shaft of Electrode Roller and Power Supply Brush, and Supply of Lubricating Oil

During electroplating treatment for 500 hours, whether jerkiness had occurred at each rotation shaft of each electrode roller was visually observed every 24 hours. When jerkiness had occurred, the lubricating oil was supplied to the rotation shaft of the electrode roller. In addition, the temperature of the contact portion between each rotation shaft of each electrode roller and each power supply brush was measured.

### Replacement of Power Supply Brush

During electroplating treatment for 5000 hours, when the power supply brush had been corroded, the power supply brush was replaced.

### Observation of Appearance of Metal Porous Body

The number of cracks generated in the skeleton portion of each metal porous body was confirmed by using an electron microscope (a magnification of 40 times).

### Ultrasonic Vibration Test for Metal Porous Body

The produced sheet-like metal porous body of each of the examples and the comparative examples was rolled into a thickness of 0.3 mm. Then, an ultrasonic welding machine was used with an ultrasonic horn having a 10 mm × 7 mm rectangle, the lead portion was not welded, and ultrasonic vibration was applied to the sheet-like metal porous body to measure substitutive strength for weldability. A seat having 24 holes of 1.5 mm squares formed in a grid pattern with respect to the dimensions 10 mm × 7 mm of the ultrasonic horn was used such that the clearance between the ultrasonic horn and the seat was 0.2 mm. Conditions of a pressure of 0.2 MPa and a frequency of 20 kHz were set. Under each condition, an ultrasonic test was performed at 9 points, the number of through holes in the metal porous body within each 10 mm × 7 mm rectangle was visually counted, and the average of the numbers at the 9 points was calculated.

### <Evaluation Method for Battery>

In order to investigate crack occurrence states of the metal porous body (positive electrode) and the lead welded portion within each battery obtained above, the positive electrode was taken out after the battery was produced, the active material was removed by using an ultrasonic cleaner, and the crack occurrence states were confirmed with a stereomicroscope. For each battery obtained above, charging and discharging was initially performed at a low current in several cycles, and then discharge characteristics and cycle characteristics were investigated. For discharge characteristics, charging was performed up to 120% of the battery capacity at 1C, then discharging was performed at each of discharge rates of 1C and 10C, and an operating voltage and a capacity utilization rate were investigated at that time. For cycle characteristics, charging and discharging in which charging was performed up to 120% of the battery capacity at 1C, discharging was performed at 1C, and a voltage at end of the discharging was set to 0.8 V, was repeated for 600 cycles, and then a capacity retention rate was investigated. The capacity retention rate was calculated on the basis of the utilization rate at 1C obtained in the test for discharge characteristics.

### <Evaluation Results>

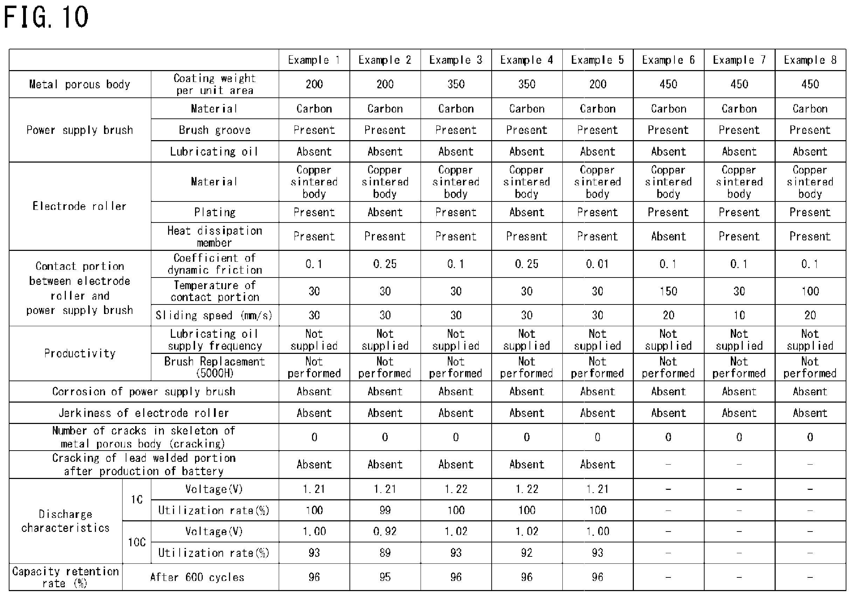

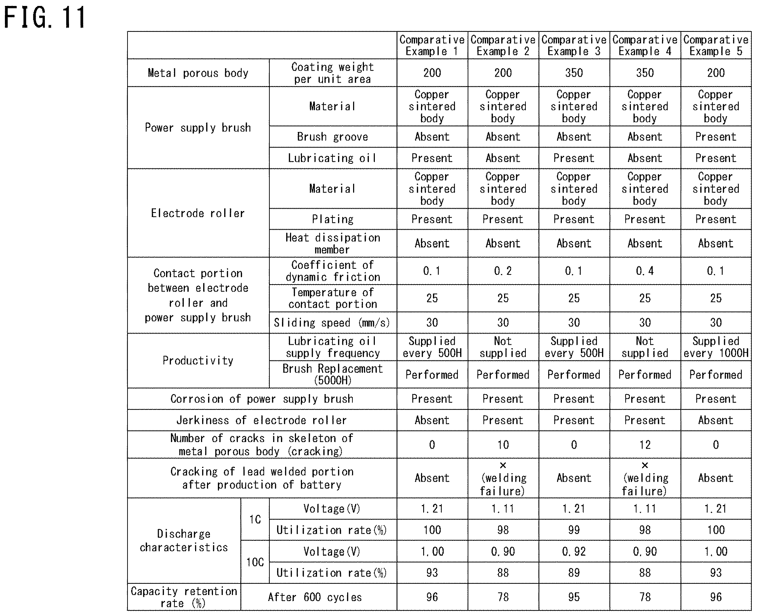

FIG. 10 is a table showing evaluation results obtained by the evaluation method for the metal porous bodies and the batteries of the above plurality of examples (Examples 1 to 8). In addition, FIG. 11 is a table showing evaluation results obtained by the evaluation method for the metal porous bodies and the batteries of the above comparative examples (Examples 1 to 5).

In each of Comparative Examples 1 to 5, corrosion of the power supply brushes made of copper was observed, and thus the power supply brushes were replaced. On the other hand, in each of Examples 1 to 8, corrosion of the power supply brushes made of carbon was not observed, and the power supply brushes were not replaced.

In Comparative Examples 2 to 4, jerkiness occurred at the electrode rollers, but in each of Examples 1 to 8, jerkiness did not occur at the electrode rollers, and the lubricating oil was not supplied to the rotation shafts of the electrode rollers. In particular, in Examples 1 to 5, even when the amount of plating was reduced in the electroplating treatment such that the coating weight per unit area of the metal porous body (the sum of the weight of the conductive layer per unit area and the weight of the metal plating layer per unit area) was not less than 200 g/m² and not greater than 350 g/m², it was confirmed that jerkiness did not occur at the electrode rollers.

As in Examples 6 to 8, when the amount of plating was increased such that the coating weight per unit area of the metal porous body was greater than 350g/m², i.e., 450g/m², the temperatures of the contact portions between the rotation shafts of the electrode rollers and the power supply brushes were increased and the sliding speeds of the rotation shafts of the electrode rollers were decreased as compared to those in Examples 1 to 5, and thus it was confirmed that such an increase in the amount of plating was disadvantageous in cost and the productivity was also decreased.

In Comparative Examples 2 and 4, cracks occurred in the skeleton of each metal porous body and the lead welded portion of each battery, but in each of Examples 1 to 5, no crack occurred in the skeleton and the lead welded portion. Accordingly, in Examples 1 to 5, it was confirmed that the discharge characteristics and the capacity retention rate of each battery were improved as compared to those in Comparative Examples 2 and 4.

In Comparative Examples 2 and 4, when the lubricating oil was not applied to the contact portions between the power supply brushes made of copper and the rotation shafts of the electrode rollers, the coefficients of dynamic friction were higher values than those in Comparative Examples 1, 3, and 5 in which the lubricating oil was applied to the contact portions. Accordingly, it is found that, when the power supply brushes made of copper are used, it is necessary to apply the lubricating oil to the contact portions.

On the other hand, in Examples 1 to 8, when the lubricating oil was not applied to the contact portions between the power supply brushes made of carbon and the rotation shafts of the electrode rollers, the coefficients of dynamic friction were almost not different from the coefficients of dynamic friction when the lubricating oil was applied to the contact portions between the power supply brushes made of copper and the rotation shafts of the electrode rollers as in Comparative Examples 1, 3, and 5. Accordingly, it was confirmed that, when the power supply brushes made of carbon are used, it is not necessary to apply the lubricating oil to the contact portions.

In Comparative Examples 2 and 4, when the lubricating oil was not applied to the contact portions between the power supply brushes made of copper and the rotation shafts of the electrode rollers, the coefficients of dynamic friction were higher values than those in Comparative Examples 1, 3, and 5 in which the lubricating oil was applied to the contact portions. Accordingly, it is found that, when the power supply brushes made of copper are used, it is necessary to apply the lubricating oil to the contact portions.

On the other hand, in Examples 1 to 8, when the lubricating oil was not applied to the contact portions between the power supply brushes made of carbon and the rotation shafts of the electrode rollers, the coefficients of dynamic friction were almost not different from the coefficients of dynamic friction when the lubricating oil was applied to the contact portions between the power supply brushes made of copper and the rotation shafts of the electrode rollers as in Comparative Examples 1, 3, and 5. Accordingly, it was confirmed that, when the power supply brushes made of carbon are used, it is not necessary to apply the lubricating oil to the contact portions.

When Example 6 and Example 8 are compared to each other, the sliding speeds of the electrode rollers were equal to each other (20 mm/s), but the temperatures of the contact portions between the rotation shafts of the electrode rollers and the power supply brushes in Example 8 in which the heat dissipation members are provided, were lower than those in Example 6 in which no heat dissipation member is provided. Accordingly, it was confirmed that, when the heat dissipation members are provided, it is not necessary to ensure heat resistance of members around the power supply brushes.

When Comparative Example 1 and Comparative Example 5 are compared to each other, the frequency of supply of the lubricating oil to the rotation shafts of the electrode rollers in Comparative Example 5 in which the grooves are formed on the contact surfaces of the power supply brushes that are in contact with the rotation shafts of the electrode rollers, was less than that in Comparative Example 1 in which grooves are not formed on the contact surfaces. In addition, in Examples 1 to 8 in which the grooves are formed on the contact surfaces, the lubricating oil was not supplied to the rotation shafts of the electrode rollers. Accordingly, it was confirmed that, when the grooves are formed on the contact surfaces, the productivity of the metal porous body is improved.

From the above evaluation results, with the method for producing a metal porous body according to the present embodiment and the plating apparatus 50, in the electroplating treatment, the power supply brushes that supply power to the electrode rollers by coming into sliding contact with the electrode rollers are less likely to be corroded as compared to conventional power supply brushes made of copper, since the power supply brushes are formed by a material containing carbon, which has excellent corrosion resistance, as a main component. Therefore, it is not necessary to frequently replace the power supply brushes, and thus the productivity of the metal porous body can be improved.

Since the corrosion resistance of the power supply brushes is improved, even when the amount of plating is reduced in the electroplating treatment, occurrence of jerkiness at the electrode rollers can be inhibited. Accordingly, cracking can be inhibited from occurring in the metal porous body thereby to reduce the strength of the metal porous body, and thus the quality of the metal porous body can be improved.

Since carbon has a lower coefficient of dynamic friction and therefore better slidability than copper, it is not necessary to apply the lubricant to the contact portions between the electrode rollers and the power supply brushes. Therefore, work of periodically applying the lubricant is unnecessary, and thus the productivity of the metal porous body can be further improved.

Since heat generated in each power supply brush is dissipated to the outside by the heat dissipation member connected to the power supply brush, a rise in the temperature of the power supply brush can be effectively inhibited. Accordingly, it is not necessary to ensure heat resistance of members around the power supply brush, and thus it is not necessary to add a cooling function. As a result, the cost is reduced.

Since each power supply brush is abraded earlier than the electrode roller, only the power supply brush needs to be periodically replaced, and work of replacing the electrode roller is unnecessary. As a result, the productivity of the metal porous body can be further improved.

Since the rotation shafts of the electrode rollers are each composed of a metallic sintered body and the surface of the sintered body is subjected to plating treatment, corrosion of the rotation shafts of the electrode rollers can be prevented.

Since abrasion powder generated by sliding contact between the power supply brushes and the rotation shafts of the electrode rollers are guided and discharged to the outside by the grooves formed on the contact surfaces of the power supply brushes that are in contact with the rotation shafts of the electrode rollers, the abrasion powder can be prevented from aggregating into lumps and accumulating in the gaps between the power supply brushes and the rotation shafts of the electrode rollers. Accordingly, it is not necessary to apply the lubricant to the contact portions between the rotation shafts of the electrode rollers and the power supply brushes. Therefore, work of periodically applying the lubricant is unnecessary, and thus the productivity of the metal porous body can be further improved.

Since the coefficient of dynamic friction of each power supply brush is 0.01 to 0.40, the slidability of the power supply brush can be improved while the production cost is reduced.

Since the current density during power supply from each power supply brush to the electrode roller is 5 A/cm² to 15 A/cm², an increase in the size of the entire power supply device including the power supply brushes can be inhibited. In addition, a rise in the temperature of the power supply brush can be inhibited. Accordingly, it is not necessary to ensure heat resistance of members around the power supply brush, and thus it is not necessary to add a cooling function. As a result, the cost is reduced.

### [Others]

Although the method for producing a metal porous body according to the above embodiment has been described for the case of application to a method for producing a metal porous body that is used as an electrode of a battery, the use of the metal porous body is not necessarily limited to an electrode of a battery, and the method may be applied to a method for producing a metal porous body that is used as a filter, a catalyst support, a metal composite, or the like that requires heat resistance. However, it is particularly effective to apply the method for producing a metal porous body according to the above embodiment to a method for producing a metal porous body that is used as an electrode of a battery.

It should be noted that the embodiments disclosed herein are to be considered in all respects as illustrative and not restrictive. The scope of the present invention is defined by the scope of the claims rather than by the meaning described above, and all changes which come within the meaning and range of equivalency of the claims are therefore intended to be embraced therein.

### REFERENCE SIGNS LIST

- 1: resin porous body
- 2: conductive layer
- 3: conductive resin porous body
- 4: metal plating layer
- 5: plated resin porous body
- 10: metal porous body
- 11: skeleton
- 20: battery
- 21: positive electrode plate
- 22: separator
- 23: negative electrode plate
- 24: casing
- 30: plating apparatus
- 31: first plating tank
- 32: second plating tank
- 33: plating bath
- 34: cylindrical electrode
- 35: anode
- 36: tank
- 37: feeding roller
- 38: electrode roller
- 38a: rotation shaft
- 39: plating bath
- 40: anode
- 50: power supply device
- 51: power supply brush
- 51a: contact surface
- 52: biasing member (heat dissipation member)
- 53: casing
- 55: groove
- 56A, 56B: fixing plate (heat dissipation member)
- 57A, 57B: bolt
- 61: preliminary plating tank
- 62: main plating tank
- 63: plating bath
- 64: anode
- 65: presser roller
- 66: electrode roller
- 66a: rotation shaft
- 67: plating bath
- 68: first presser roller
- 69: first electrode roller
- 69a: rotation shaft
- 70: first anode
- 71: first feeding roller
- 72: second feeding roller
- 73: second anode
- 74: second presser roller
- 75: second electrode roller
- 75a: rotation shaft
- T: tangent direction

## Claims

1. A method for producing a metal porous body, comprising the steps of:
performing electrical conduction treatment on a surface of a skeleton of a sheet-like resin porous body having the skeleton with a three-dimensional network structure, to obtain a conductive resin porous body having a conductive layer;
performing electroplating treatment on a surface of a skeleton of the conductive resin porous body to obtain a plated resin porous body having a metal plating layer; and
performing treatment of removing at least the resin porous body from the plated resin porous body to obtain a metal porous body, wherein
in the electroplating treatment, power was supplied to a rotation shaft of a rotating electrode roller by bringing a power supply brush formed by a material containing carbon as a main component into sliding contact with the rotation shaft.

2. The method for producing a metal porous body according to claim 1, wherein, in the electroplating treatment, heat generated in the power supply brush is dissipated to the outside by a heat dissipation member connected to the power supply brush.

3. The method for producing a metal porous body according to claim 1 or 2, wherein the rotation shaft of the electrode roller is composed of a material that is less likely to be abraded than the power supply brush.

4. The method for producing a metal porous body according to claim 3, wherein the rotation shaft of the electrode roller is composed of a metallic sintered body whose surface is subjected to plating treatment.

5. The method for producing a metal porous body according to claim 3 or 4, wherein, in the electroplating treatment, abrasion powder generated on a contact surface of the power supply brush that is in contact with the rotation shaft of the electrode roller is guided and discharged to the outside by a groove formed on the contact surface.

6. The method for producing a metal porous body according to any one of claims 1 to 5, wherein the power supply brush has a coefficient of dynamic friction of 0.01 to 0.40.

7. The method for producing a metal porous body according to any one of claims 1 to 6, wherein a current density during power supply from the power supply brush to the electrode roller is 5 A/cm² to 15 A/cm².

8. A plating apparatus for performing electroplating treatment on a surface of a skeleton of a conductive resin porous body obtained by forming a conductive layer on a surface of a skeleton of a sheet-like resin porous body having the skeleton with a three-dimensional network structure, to form a metal plating layer, the plating apparatus comprising:
a plating tank;
an electrode roller having a rotatable rotation shaft and configured to feed the conductive resin porous body to the plating tank by rotating the rotation shaft; and
a power supply brush configured to come into sliding contact with the rotation shaft of the electrode roller, wherein
the power supply brush is formed by a material containing carbon as a main component.
